# EUROPÄISCHE PATENTANMELDUNG

(11) **EP 2 402 729 A1**
(43) Veröffentlichungstag der Anmeldung: **04.01.2012**
(21) Anmeldenummer: 11004909.5
(22) Anmeldetag: 16.06.2011
(51) Int. Cl.: G01L 1/22, G01L 3/10, G01L 3/14

(54) **Drehmomenterfassungsvorrichtung**

(30) Priorität: 29.06.2010 DE 102010025520
(71) Anmelder: Voith Patent GmbH, 89522 Heidenheim (DE)
(72) Erfinder: Grawenhof, Peter, 89547 Dettingen (DE)
(74) Vertreter: Schmidt, Sven Hendrik

(57) **Zusammenfassung**

Die Erfindung betrifft eine Drehmomenterfassungsvorrichtung, insbesondere für Gelenkwellen, zum Erfassen eines mittels eines Bauteils über eine Drehachse übertragenen Drehmomentes
- mit einem sich in Richtung einer Längsachse erstreckenden Verformungskörper;
- der Verformungskörper weist ein erstes Anschlusselement zum drehfesten Anschluss des Verformungskörpers an einer ersten Position des Bauteils auf;
- der Verformungskörper weist ein zweites Anschlusselement zum drehfesten Anschluss des Verformungskörpers an einer zweiten Position des Bauteils versetzt entlang der Drehachse gegenüber der ersten Position auf;
- das zweite Anschlusselement ist mit einem Abstand in Richtung der Längsachse versetzt gegenüber dem ersten Anschlusselement positioniert;
- der Verformungskörper weist ferner einen nachgiebigen Biegebalken auf, der kraftschlüssig mit dem ersten Anschlusselement und dem zweiten Anschlusselement verbunden ist und eine Relativbewegung zwischen dem ersten Anschlusselement und dem zweiten Anschlusselement senkrecht oder winklig zur Längsachse durch seine verbiegende Verformung ausgleicht;
- der Biegebalken ist über einen Hebelmechanismus am ersten Anschlusselement und/oder am zweiten Anschlusselement angeschlossen, wobei der Hebelmechanismus die Relativbewegung zwischen dem ersten Anschlusselement und dem zweiten Anschlusselement in eine vergleichsweise größere Relativbewegung zwischen den Enden des Biegebalkens transformiert.

## Beschreibung

Die vorliegende Erfindung betrifft eine Drehmomenterfassungsvorrichtung, insbesondere für Gelenkwellen, zum Erfassen eines mittels eines Bauteils, insbesondere der Gelenkwelle, über eine Drehachse übertragenen Drehmomentes.

Herkömmlich kommen zur Drehmomenterfassung Dehnungsmessstreifen (DMS) zum Einsatz, die beispielsweise auf die Oberfläche einer Gelenkwelle im Bereich der Gelenkgabel aufgeklebt werden, da hier erfahrungsgemäß die größten Verformungen auftreten, welche durch das übertragene Drehmoment verursacht werden. Nachteilig ist, dass eine Berechnung des tatsächlich übertragenen Drehmomentes aus der erfassten Verformung aufgrund der komplizierten Geometrie der Gelenkwelle im Bereich der Gelenkgabel aufwändig und mitunter fehlerbehaftet ist. Durch Aufbringen eines definierten Bremsmomentes kann die Drehmomenterfassungsvorrichtung zwar kalibriert werden, was aber insbesondere bei größeren Abmessungen und der daraus resultierenden hohen Verformungsdrehmomente auch zu einem höheren Aufwand führt. Dies betrifft besonders in Walzwerkantrieben eingesetzte Gelenkwellen, insbesondere Kreuzgelenkwellen, wie sie die vorliegende Erfindung gemäß einer Ausführungsform betrifft.

Der vorliegenden Erfindung liegt die Aufgabe zugrunde, eine Drehmomenterfassungsvorrichtung allgemein für ein mittels eines Bauteils über eine Drehachse übertragenen Momentes und insbesondere für Gelenkwellen, beispielsweise in Walzantrieben, anzugeben, welche die übertragenen Drehmomente zuverlässig und exakt erfasst und universell, insbesondere an rotationssymmetrischen, beispielsweise rohrförmigen, Abschnitten einer Gelenkwelle, in denen die Drehsteifigkeit derselben zuverlässig mit analytischen Verfahren berechenbar ist, einsetzbar ist. Vorteilhaft soll die Drehmomenterfassungsvorrichtung im Auslieferungszustand leicht kalibrierbar sein oder bereits kalibriert sein, sodass sie eine einbaufertige Lösung auch für Nicht-Elektroniker darstellt.

Zum druckschriftlichen Stand der Technik wird auf die folgenden Dokumente verwiesen:
US 000003780817 A
DE 102007047500 A1
DE 000019605096 C2
DE 000010037782 A1
EP 000000227850 B1
US 000005546817 A
DE 000004215306 A1
Merkblatt der Physikalisch-Technischen Bundesanstalt: "Liste geprüfter Dehnungsmeßstreifen-Wägezellen".(15.8.2007).
Quelle: http://wvvw.ptb.de/de/org/1/11/112/infos/index.htm

Die erfindungsgemäße Aufgabe wird durch eine
Drehmomenterfassungsvorrichtung mit den Merkmalen von Anspruch 1 gelöst. In den abhängigen Ansprüchen sind vorteilhafte und besonders zweckmäßige Ausgestaltungen der Erfindung angegeben.

Mit der erfindungsgemäßen Drehmomenterfassungsvorrichtung ist es möglich, das mittels eines Bauteils beliebiger Form, bevorzugt mit rotationssymmetrischer Form, über eine Drehachse übertragene Drehmoment zuverlässig und exakt zu erfassen, auch wenn die an einer Position beziehungsweise an einem Abschnitt über dem Umfang des Bauteils auftretenden durch die Drehmomentübertragung verursachten Dehnungen äußerst gering sind, was in der Praxis bei den hochfesten Materialien des Bauteils und/oder den massiven Ausgestaltungen des Bauteils häufig der Fall ist. Die erfindungsgemäße Drehmomenterfassungsvorrichtung erfasst nämlich die relative Verdrehung innerhalb des Bauteils zwischen zwei in Axialrichtung des Bauteils zueinander mit Abstand angeordneten Punkten oder Bereichen auf dem Umfang des Bauteils. Diese relative Verdrehung zwischen den relativ weit voneinander entfernten Anschlusspunkten wird in eine Verformung eines Verformungskörpers der Drehmomenterfassungsvorrichtung mit relativ eng beabstandeten Kraftangriffspunkten umgewandelt, welche dann wieder über herkömmliche Messverfahren, beispielsweise mittels eines Dehnungsmessstreifens erfasst werden kann. Erfindungsgemäß wird dabei die Verformung des Verformungskörpers mechanisch verstärkt, insbesondere derart, dass innerhalb des Verformungskörpers eine größere Relativbewegung erzeugt wird, als zwischen den beiden Anschlusspunkten beziehungsweise Anschlussbereichen der Drehmomenterfassungsvorrichtung an den in Axialrichtung des Bauteils zueinander beabstandeten Positionen auftritt.

In der Regel wird die Axialrichtung des Bauteils annähernd oder vollständig parallel zur Drehachse verlaufen, und die Längsachse des Verformungskörpers erstreckt sich vorteilhaft ebenfalls im Wesentlichen oder exakt in Richtung der Drehachse.

Im Einzelnen weist die erfindungsgemäße Drehmomenterfassungsvorrichtung, die besonders zur Erfassung von Drehmomenten und/oder mechanischen Spannungen in Gelenkwellen, insbesondere in Walzwerksantrieben, ausgeführt ist, und welche beispielsweise auch im Bereich des zylinderförmigen Abschnittes der Gelenkwellen, die insbesondere als Kreuzgelenkwellen ausgeführt sind, zur Erfassung montiert werden kann, einen sich in Richtung einer Längsachse erstreckenden Verformungskörper auf, der ein erstes Anschlusselement und ein zweites Anschlusselement aufweist. Das erste Anschlusselement ist zum drehfesten Anschluss des Verformungskörpers an einer ersten axialen Position des Bauteils, dessen Drehmomentübertragung erfasst werden soll, ausgeführt, und das zweite Anschlusselement ist zum drehfesten Anschluss des Verformungskörpers an einer zweiten axialen Position des Bauteils, die mit Abstand entlang der Drehachse gegenüber der ersten Position versetzt ist, ausgeführt. Demgemäß sind das erste Anschlusselement und das zweite Anschlusselement mit einem Abstand entlang der Längsachse des Verformungskörpers am Verformungskörper positioniert, wobei das erste Anschlusselement vorteilhaft an einem ersten axialen Ende des Verformungskörpers und das zweite Anschlusselement vorteilhaft an einem zweiten, dem ersten axialen Ende entgegengesetzten axialen Ende positioniert ist.

Der Verformungskörper der erfindungsgemäßen
Drehmomenterfassungsvorrichtung weist ferner einen nachgiebigen, insbesondere elastisch nachgiebigen Biegebalken auf, der kraftschlüssig mit dem ersten Anschlusselement und dem zweiten Anschlusselement verbunden ist, sodass er eine Relativbewegung zwischen dem ersten Anschlusselement und dem zweiten Anschlusselement senkrecht oder winklig zur Längsachse des Verformungskörpers durch seine verbiegende Verformung ausgleicht.

Um die zuvor beschriebene mechanische Verstärkung der Relativbewegung zu erreichen, ist es von Vorteil, dass das erste Anschlusselement und das zweite Anschlusselement über ein sich zumindest teilweise in Richtung der Längsachse erstreckendes Verbindungselement vorteilhaft kraftschlüssig und/oder formschlüssig und/oder stoffschlüssig miteinander verbunden sind, und das Verbindungselement einen ersten Abschnitt aufweist, der den Biegebalken bildet, und ferner einen zweiten sich an dem ersten Abschnitt anschließenden starren Abschnitt.

Vorteilhaft erstrecken sich der erste den Biegebalken bildende, insbesondere vergleichsweise kürzere, Abschnitt und der zweite sich daran anschließende starre, insbesondere vergleichsweise längere, Abschnitt in Richtung der Längsachse des Verformungskörpers beziehungsweise in Richtung der Drehachse, über welche mittels des Bauteils das zu erfassende Drehmoment übertragen wird. Von Vorteil ist es ferner, wenn sich der zweite Abschnitt in Axialrichtung unmittelbar an den ersten Abschnitt anschließt.

Durch die Kombination des den Biegebalken bildenden ersten Abschnittes und den sich daran anschließenden zweiten starren Abschnitt kann eine vergleichsweise stärkere Verformung des Biegebalkens erreicht werden, im Vergleich zu einer Ausführungsform, bei welchem der Biegebalken sich über das gesamte Verbindungselement zwischen dem ersten Anschlusselement und dem zweiten Anschlusselement erstreckt. Aufgrund der Starrheit des zweiten Abschnittes, die durch eine Ausführung mit vergleichsweise größerem Querschnitt und/oder steiferem Werkstoff im Vergleich zum Biegebalken erreicht werden kann, tritt der Großteil oder die gesamte Verformung zum Ausgleich der Relativbewegung zwischen dem ersten Anschlusselement und dem zweiten Anschlusselement innerhalb des Biegebalkens auf, was eine stärkere Verformung zur Folge hat, die leichter oder überhaupt erst erfasst werden kann, beispielsweise mittels eines oder mehrerer Dehnungsmessstreifen.

Wenn der Biegebalken über einen Hebelmechanismus an dem ersten Anschlusselement und/oder dem zweiten Anschlusselement angeschlossen ist, und der Hebelmechanismus die Relativbewegung zwischen dem ersten Anschlusselement und dem zweiten Anschlusselement in eine vergleichsweise größere Relativbewegung zwischen den Enden des Biegebalkens transformiert, kann zusätzlich oder alternativ zu der zuvor genannten Maßnahme des am Biegebalken angeschlossenen starren Abschnitts auch die Verformung innerhalb des Biegebalkens verstärkt werden.

Vorteilhaft weist der Hebelmechanismus einen Hebelarm auf, der im Bereich seines ersten Endes oder am ersten Ende über einen ersten Drehpunkt verdrehbar am ersten Anschlusselement angeschlossen ist, im Bereich seines zweiten Endes oder an seinem zweiten Ende über einen zweiten Drehpunkt verdrehbar im Bereich eines Endes des Biegebalkens oder am Ende des Biegebalkens angeschlossen ist, und über einen dritten Drehpunkt zwischen dem ersten Drehpunkt und dem zweiten Drehpunkt verdrehbar am zweiten Anschlusselement angeschlossen ist. Der dritte Drehpunkt kann gemäß einer Ausführungsform in der Mitte zwischen dem ersten Drehpunkt und dem zweiten Drehpunkt positioniert sein. Um eine noch stärkere Hebelwirkung zu erreichen, kann jedoch auch vorgesehen sein, den dritten Drehpunkt näher zu dem zweiten Drehpunkt als zu dem ersten Drehpunkt zu positionieren. Prinzipiell kann natürlich auch der dritte Drehpunkt näher dem ersten Drehpunkt als dem zweiten Drehpunkt angeordnet sein.

Günstig ist es, wenn der Biegebalken mit einem seiner beiden Enden frei von einem Gelenk, das heißt frei von einem Drehpunkt an dem ersten Anschlusselement oder dem zweiten Anschlusselement angeschlossen ist, wohingegen das zweite entgegengesetzte Ende über ein Gelenk beziehungsweise einen Drehpunkt am Hebelmechanismus angeschlossen ist. Der Biegebalken ist demnach als einseitig eingespannter Biegebalken ausgeführt, im Gegensatz zu zweiseitig eingespannten Biegebalken.

Einer oder mehrere Drehpunkte können gemäß einer ersten Ausführungsform durch Gelenke ausgebildet sein. Besonders vorteilhaft werden die Drehpunkte jedoch durch eine verformbare stoffschlüssige Verbindung zwischen dem Hebelarm und dem jeweils verdrehbar angeschlossenen Anschlusselement beziehungsweise dem angeschlossenen Biegebalken gebildet. Dabei können Maßnahmen getroffen sein, um die Drehachse im jeweiligen Drehpunkt an einer bestimmten vordefinierten Position zu halten, beispielsweise indem entsprechende Einschnürungen beziehungsweise Querschnittsverringerungen im Material im Drehpunkt verwendet wird.

Gemäß einer Ausführungsform weist der Biegebalken nicht einen konstanten Querschnitt von seinem ersten Ende bis zu seinem zweiten Ende auf, sondern der Querschnitt ist, vorteilhaft kontinuierlich verjüngt, insbesondere stetig verjüngt ausgeführt. Wenn der Biegebalken als erster Abschnitt des Verbindungselementes mit einem sich daran anschließenden zweiten starren Abschnitt ausgeführt ist, so ist das vergleichsweise verjüngte Ende vorteilhaft von dem zweiten starren Abschnitt entfernt positioniert. Hierdurch kann erreicht werden, dass die im Biegebalken auftretenden Spannungen und die daraus resultierenden Verformungen, insbesondere Dehnungen und/oder Stauchungen an der Oberfläche, entlang des Biegebalkens betragsmäßig ähnlich verteilt werden von der Krafteinleitungsstelle am dünnen Ende des Biegebalkens bis zum insbesondere am starren zweiten Abschnitt angeschlossenen vergleichsweise dickeren Ende des Biegebalkens. Die Querschnittsverjüngung kann bezüglich der Höhe und/oder der Breite des Biegebalkens ausgeführt sein.

Von besonderem Vorteil ist es, wenn der Biegebalken in seiner Höhe oder seiner Breite keilförmig oder bogenförmig verjüngt ist. Bei einer Verjüngung in der Höhe kann ein parabelförmiger Verlauf der Oberfläche in Richtung der Längsachse des Biegebalkens, insbesondere einer quadratischen Parabel, auf der oberen oder unteren Oberfläche oder auf diesen beiden Oberflächen eine optimale Spannungsverteilung bewirken. Ferner stellt eine Kreislinienfunktion, bei welcher der Verlauf der einen genannten Oberfläche oder von beiden Oberflächen einem Kreisbogen folgt, einen günstigen Kompromiss hinsichtlich einer betragsmäßig gleichen Spannung/Dehnung und einer einfachen Herstellbarkeit dar. Bei einer Verjüngung in der Breite ist eine lineare Verjüngung ein geeignetes Mittel zum Erzielen eines betragsmäßig gleichen Spannungs-/Dehnungsniveaus, wobei der Biegebalken in einer Draufsicht von oben beispielsweise eine Dreiecksform aufweist.

Wenn zuvor die Breite und die Höhe des Biegebalkens genannt wurden, so bezieht sich diese Definition auf die Richtung der Biegung des Biegebalkens. Die Höhenrichtung liegt in einer Ebene mit der Biegerichtung oder erstreckt sich in Biegerichtung, wohingegen die Breitenrichtung senkrecht oder winklig zur Höhenrichtung und quer zur Längsachse verläuft. Dabei kann der Biegebalken "auf der Seite liegend" in der Drehmomenterfassungsvorrichtung oder im Verformungskörper angeordnet sein, so dass die Breitenrichtung des Biegebalkens der Höhenrichtung der Drehmomenterfassungsvorrichtung oder des Verformungskörpers entspricht.

Die erfindungsgemäße Drehmomenterfassungsvorrichtung kann ein Gehäuse aufweisen, das, um eine Kraftübertragung über das Gehäuse parallel zum Verformungskörper zu verringern oder zu verhindern, vorteilhaft relativbeweglich gegenüber dem ersten Anschlusselement und/oder dem zweiten Anschlusselement gelagert ist, insbesondere an einem oder an beiden Anschlusselementen. Beispielsweise kann das Gehäuse mittels eines elastischen Anschlusses an dem ersten Anschlusselement und/oder dem zweiten Anschlusselement angeschlossen sein. Beispielsweise kann die Verbindung zwischen dem Gehäuse und dem Anschlusselement über einen Elastomerwerkstoff, beispielsweise mit einem kreisförmigen oder ovalen Querschnitt, hergestellt sein.

Von Vorteil ist es, wenn eine elektronische Steuervorrichtung und/oder eine Spannungsversorgung, die zur Erfassung und/oder Weiterverarbeitung der im Biegebalken auftretenden Spannungen/Verformungen vorgesehen ist, in dem Gehäuse gelagert ist, insbesondere starr an diesen angeschlossen. Die elektronische Steuervorrichtung kann beispielsweise durch eine Messelektronikplatine und die Spannungsversorgung kann durch Batterien gebildet sein.

Selbstverständlich kommt auch eine externe Spannungsversorgung in Betracht und/oder das Vorsehen einer Schnittstelle für eine externe Datenverarbeitung und/oder Online-Überwachung der erfassten Spannungen/Verformungen. Zusätzlich oder alternativ kann auch ein interner Speicher vorgesehen sein, der die Daten speichert.

Von Vorteil ist es, wenn eine elektronische Steuervorrichtung der Drehmomenterfassungsvorrichtung zugeordnet ist, welche insbesondere von der Drehmomenterfassungsvorrichtung getragen wird, und welche die Verformung des Biegebalkens insbesondere über ein oder zwei Dehnungsmessstreifen auf der Oberfläche des Biegebalkens mit einem zulässigen vorgegebenen, insbesondere in der elektronischen Steuervorrichtung oder einem dieser zugeordneten Speicher gespeicherten Grenzwert vergleicht und bei einer Grenzwertüberschreitung ein optisches und/oder ein elektronisches Signal ausgibt, welches dem Benutzer anzeigt, dass die Grenzwertüberschreitung stattfindet beziehungsweise stattgefunden hat oder das in einem Speicher zur späteren Abfrage gespeichert werden kann.

Die Erfindung soll nachfolgend anhand eines Ausführungsbeispiels und den Figuren exemplarisch erläutert werden.

Es zeigen:
- Figur 1: eine erfindungsgemäß ausgeführte Drehmomenterfassungsvorrichtung montiert an einem Bauteil;
- Figur 2: eine schematische Darstellung einer ersten Ausführungsform der Erfindung;
- Figur 3: eine gegenüber der Figur 2 verbesserte Ausführungsform;
- Figur 4: eine schematische Darstellung einer dritten Ausführungsform, welche eine Weiterbildung der Ausführungsform der Figur 3 zeigt;
- Figur 5: eine mögliche praktische Umsetzung der Ausführungsform gemäß der Figur 4;
- Figur 6: die Ausführungsform der Figur 5 in einer dreidimensionalen Ansicht;
- Figur 7: ein Ausführungsbeispiel einer erfindungsgemäßen Drehmomenterfassungsvorrichtung montiert an einer Kreuzgelenkwelle mit zwei Kreuzgelenken.

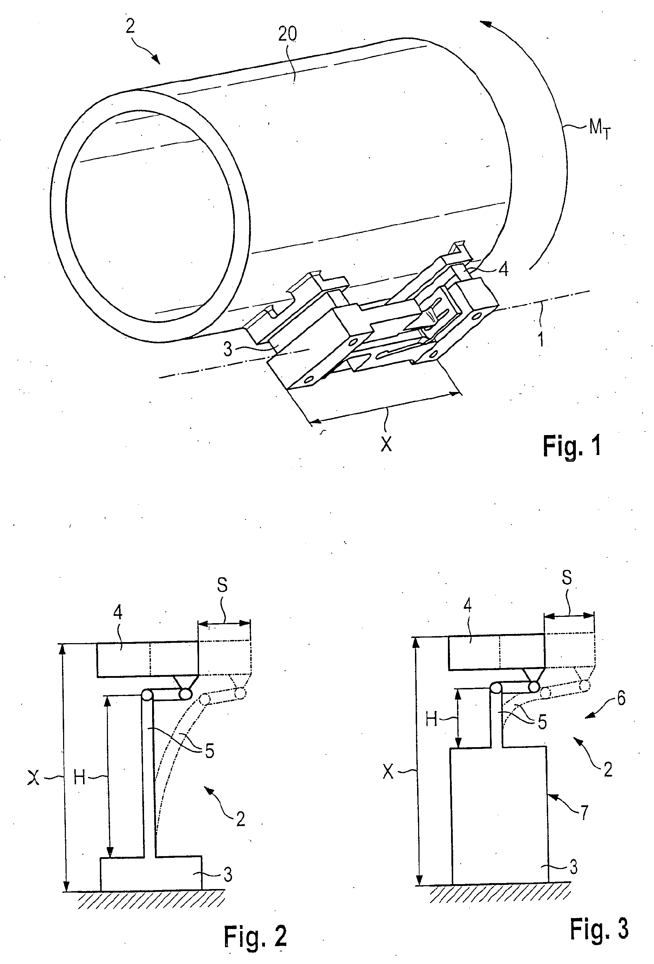

In der Figur 1 ist ein röhrenförmiges Bauteil 20 dargestellt, mittels welchem ein Drehmoment M_{T} übertragen wird. Vorliegend ist nur ein axialer Abschnitt des Bauteils 20 dargestellt. Das Bauteil 20 kann beispielsweise der mittlere Bereich einer Kreuzgelenkwelle sein.

Die Drehmomentübertragung verursacht innerhalb des Bauteils 20 eine Torsionskraft, welche zu mechanischen Spannungen und einer Verwindung im Bauteil 20 führt. Insbesondere bei Schwergelenkwellen ist im Normalbetrieb das mechanische Spannungsniveau häufig so niedrig, dass selbst an den hochbelasteten Querschnitten im Bereich der Kreuzgelenke über den Umfang an einer axialen Position auftretende Dehnungen nicht ausreichen, um in den zuverlässigen Auflösungsbereich von Dehnungsmessstreifen zur Erfassung der Spannungen beziehungsweise des übertragenen Drehmomentes zu gelangen. Dadurch waren herkömmliche Drehmomenterfassungsvorrichtungen, die auf solchen Dehnungsmessstreifen basierten, häufig nicht in der Lage, Lastkollektive, Wöhlerlinien und so weiter zuverlässig entweder für eine Überlastanzeige oder für eine spätere Auswertung zu erfassen.

Gemäß der in der Figur 1 dargestellten erfindungsgemäßen Ausführung ist daher die Drehmomenterfassungsvorrichtung über zwei in Richtung der Drehachse des Bauteils mit Abstand zueinander angeordnete Anschlusselemente 3, 4 jeweils drehfest am Bauteil 20 angeschlossen. Das erste und das zweite Anschlusselement 3, 4 sind Bestandteil eines Verformungskörpers 2 und an den beiden axialen Enden, bezogen auf die Längsachse 1 des Verformungskörpers 2, positioniert.

Vorliegend sind die Anschlusselemente 3, 4 jeweils zweiteilig aufgebaut, umfassend einen ersten Teil, der stoffschlüssig am Bauteil 20 angeschlossen ist, und einen zweiten Teil, der am ersten Teil angeschraubt ist.

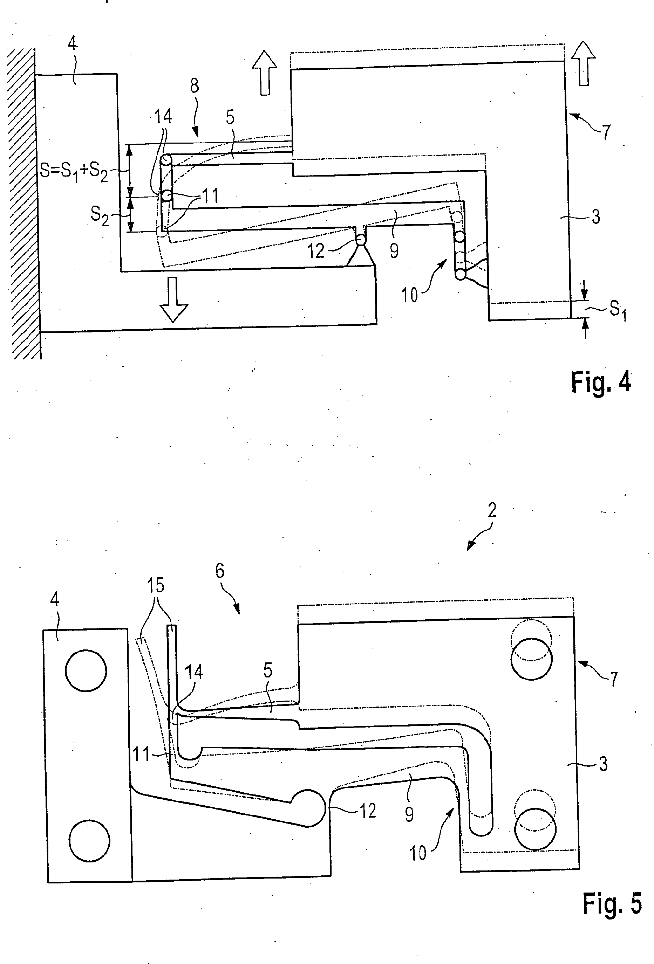

Wenn nun aufgrund des am Bauteil 20 angreifenden Drehmomentes M_{T} Verwindungskräfte angreifen, so wird sich das zweite Anschlusselement 4 gegenüber dem ersten Anschlusselement 3 in Umfangsrichtung des Bauteils 20 bewegen (oder umgekehrt), sodass ein Versatz zwischen dem zweiten Anschlusselement 4 und dem ersten Anschlusselement 3 bezogen auf diese Umfangsrichtung entsteht. Dieser Versatz ist in den Figuren 2 und 3 mit "S" bezeichnet, in der Figur 4 mit "S₁".

In der Figur 2 ist ferner schematisch dargestellt, welchen Einfluss der Versatz S zwischen dem ersten Anschlusselement 3 und dem zweiten Anschlusselement 4 auf den Verformungskörper 2 hat. So ist nämlich das erste Anschlusselement 3 über einen nachgiebigen Biegebalken 5 kraftschlüssig mit dem zweiten Anschlusselement 4 verbunden. Durch den Versatz S wird der Biegebalken 5 aus seiner geradlinigen Position, die links in der Figur 2 gezeigt ist, in eine gebogene Position, die rechts in der Figur 2 gezeigt ist, verschoben beziehungsweise verbogen. Diese Verbiegung führt zu einer Dehnung auf der einen Oberfläche des Biegebalkens 5 und einer entsprechenden Stauchung auf der gegenüberliegenden Oberfläche des Biegebalkens 5. Auf einer oder beiden Oberflächen kann ein Dehnungsmessstreifen oder eine andere geeignete Einrichtung positioniert werden, welche die Dehnung beziehungsweise die Stauchung erfasst. Aus dieser Dehnung beziehungsweise Stauchung kann dann auf den Versatz S zurückgeschlossen werden, und aus diesem auf die im Bauteil 20 herrschende Spannung beziehungsweise das mit dem Bauteil 20 übertragene Drehmoment.

Gemäß der Figur 2 weist der Biegebalken 5 eine Länge H auf, die im Wesentlichen oder vollständig dem freien Abstand zwischen dem ersten Anschlusselement 3 und dem zweiten Anschlusselement 4 entspricht. Gemäß der Figur 3 hingegen stellt der Biegebalken 5 nur einen axialen Abschnitt des Verbindungselementes 6 zwischen dem ersten Anschlusselement 3 und dem zweiten Anschlusselement 4 dar. Dieser Abschnitt, der sich aufgrund der Ausrichtung des Verbindungselementes 6 in Richtung der Längsachse 1 des Verformungskörpers 2 erstreckt, wird vorliegend als erster Abschnitt bezeichnet. Ein daran sich anschließender zweiter Abschnitt 7 ist gegenüber einer Verbiegung starr ausgeführt. Dies hat zur Folge, dass bei einem Versatz S des zweiten Anschlusselementes 4 gegenüber dem ersten Anschlusselement 3 dieser Versatz S durch einen vergleichsweise kürzeren Biegebalken 5 durch seine Verbiegung ausgeglichen werden muss, wodurch eine stärkere Verbiegung erreicht wird, vergleiche die Länge H des Biegebalkens 5 gemäß der Figur 3 mit der Länge H des Biegebalkens 5 gemäß der Figur 2. Die stärkere Verbiegung führt wieder zu stärkeren Dehnungen und Stauchungen auf der Oberfläche des Biegebalkens 5, die leichter erfasst werden können.

Bei der in der Figur 3 gezeigten Ausführungsform wird das Verbindungselement 6 ausschließlich durch den Biegebalken 5 und den sich daran anschließenden zweiten starren Abschnitt 7 gebildet. Der zweite starre Abschnitt 7 schließt sich unmittelbar am ersten Anschlusselement 3 an beziehungsweise ist einteilig mit diesem ausgeführt.

Bei der Ausführungsform gemäß der Figur 4 wird nicht nur ein vergleichsweise kurzer Biegebalken 5 verwendet, siehe den starren zweiten Abschnitt 7 zwischen dem Biegebalken 5 und dem ersten Verbindungselement 3, sondern die Verbiegung des Biegebalkens 5 wird zusätzlich dadurch verstärkt, dass ein Hebelmechanismus 8 vorgesehen ist. Der Hebelmechanismus 8 weist einen Hebelarm 9 auf, der mit seinem ersten Ende über einen Drehpunkt 10 am ersten Anschlusselement 3 angeschlossen ist, mit seinem zweiten Ende über einen zweiten Drehpunkt 11 an einem Ende des Biegebalkens 5 angeschlossen ist, und der im Bereich seiner Mitte über einen dritten Drehpunkt 12 am zweiten Anschlusselement 4 angeschlossen ist. In der gezeigten Ausführungsform ist der dritte Drehpunkt 12 außerhalb der Mitte des Hebelarms 9 in Richtung zum ersten Drehpunkt 10 positioniert, und der Anschluss des Biegebalkens 5 am zweiten Drehpunkt 11 erfolgt über einen zwischengeschalteten vierten Drehpunkt 14, um eine optimale Verformung beziehungsweise Lasteinleitung in den Biegebalken 5 beim Kippen des Hebelarms 9 zu erreichen.

Der Hebelmechanismus 8 bewirkt, dass die beiden Enden des Biegebalkens 5 nicht nur um den Versatz S₁, der sich zwischen dem ersten Anschlusselement 3 und dem zweiten Anschlusselement 4 ergibt, gegeneinander versetzt werden, sondern das auf diesen Versatz S₁ ein zweiter Versatz S₂ addiert wird, der durch den Hebelmechanismus 8 bewirkt wird. Somit ergibt sich ein Gesamtversatz S zwischen den beiden Enden des Biegebalkens 5, der eine besonders große Dehnung beziehungsweise Stauchung auf den Oberflächen des Biegebalkens 5 bewirkt, was eine besonders genaue und zuverlässige Erfassung dieser Dehnung beziehungsweise Stauchung zulässt. Hieraus kann dann wiederum sehr exakt auf das mit dem Bauteil 20 (nicht dargestellt) übertragene Drehmoment beziehungsweise die in dem Bauteil 20 in Umfangsrichtung auftretenden Spannungen geschlossen werden.

In der Figur 5 ist nun das schematische Modell gemäß der Figur 4 in eine mögliche Ausführungsform umgesetzt worden. Wie man sieht, werden hier die verschiedenen Drehpunkte nicht durch Gelenke, sondern durch stoffschlüssige Anschlüsse beziehungsweise durch gezielte Materialschwächungen innerhalb eines Bauteils - des Verformungskörpers 2 - gebildet. Diese Materialschwächungen werden vorliegend durch die Geometrie des Verformungskörpers 2 erreicht. Zusätzlich oder alternativ könnten auch lokal gegenüber der Umgebung vergleichsweise biegeelastischer Werkstoffe verwendet werden, um die verschiedenen Drehpunkte festzulegen.

Augrund des Verformungsverhaltens des Verformungskörpers 2 ist ferner der theoretisch außerhalb der Mitte des Hebelarms 9 zu platzierende dritte Drehpunkt 12 in Richtung der Mitte oder sogar über diese hinaus des Hebelarms 9, betrachtet vom ersten Anschlusselement 3 aus, versetzt worden. Trotzdem wird der gewünschte Hebeleffekt erreicht.

Ferner ist das "freie" Ende des Biegebalkens 5, das heißt jenes Ende, das dem starren zweiten Abschnitt 7 des Verbindungselementes 6 abgewandt ist, über drei Drehpunkte am Hebelarm 9 angeschlossen, nämlich den ersten Drehpunkt 11, den vierten Drehpunkt 14 und den fünften Drehpunkt 15.

Wie man in der Figur 5 erkennen kann, ist der Biegebalken 5 ferner ausgehend vom Bereich seines Anschlusses am zweiten starren Abschnitt 7 in Richtung zu seinem diesem zweiten starren Abschnitt 7 abgewandten Ende, vorliegend freies Ende genannt, verjüngt ausgeführt. Hierdurch kann eine äußerst günstige Spannungsverteilung im Biegebalken 5 erreicht werden, welche das Spannungsniveau über einen größeren Bereich, vorteilhaft über den gesamten Biegebalken 5 annähernd oder vollständig konstant hält. Der Biegebalken 5 kann beispielsweise aus Blech mit einer konstant abnehmenden Blechdicke beziehungsweise Höhe ausgeführt sein und/oder mit einer konstant abnehmenden Breite, jeweils bezogen auf den Anschluss am zweiten starren Abschnitt 7 beziehungsweise am ersten Verbindungselement 3, falls der zweite starre Abschnitt 7 nicht vorgesehen ist.

Als vorteilhaft hat sich herausgestellt, wenn der Querschnitt des Biegebalkens 5 bei konstanter Balkenbreite (Höhe des Verformungskörpers 2 verlaufend senkrecht zur Zeichnungsebene in der Figur 5) und variabler Balkenhöhe (verlaufend in der Zeichnungsebene in der Figur 5) derart gewählt wird, dass er bezogen auf eine Schnittebene, in welcher die angreifende Biegekraft verläuft, eine bogenförmige obere und untere Begrenzungslinie aufweist, vorteilhaft einer Kreisfunktion.

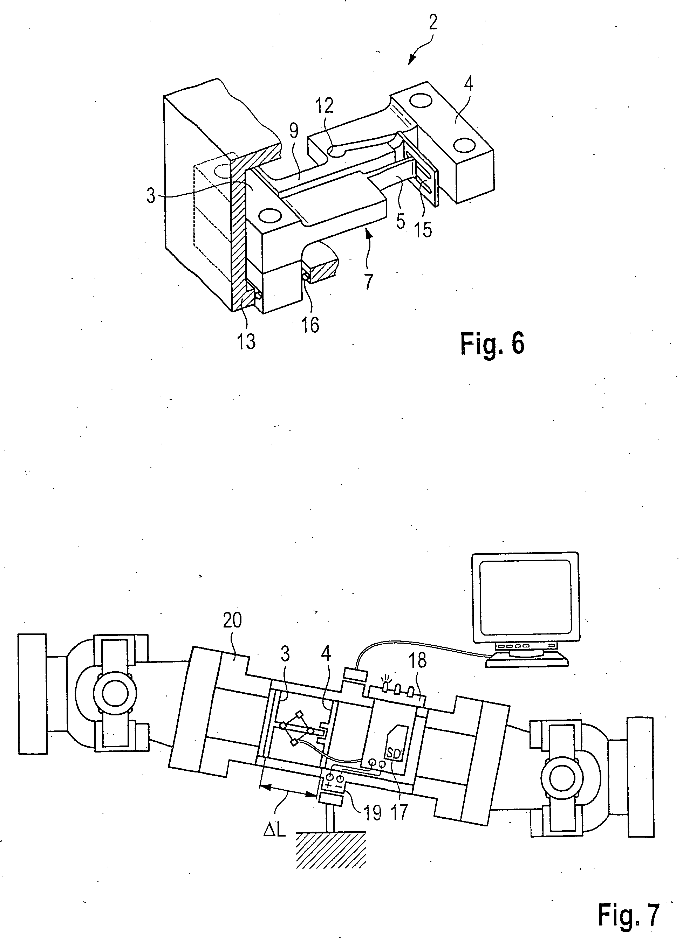

In der Figur 6 ist die Ausführungsform gemäß der Figur 5 nochmals in dreidimensionaler Ansicht dargestellt, betrachtet aus einer Blickrichtung schräg von oben.

Wie man aus den Figuren erkennen kann, sind das erste Anschlusselement 3 und das zweite Anschlusselement 4 jeweils derart ausgestaltet, dass sie über einen Anschlussbereich, der sich senkrecht zur Drehachse des Bauteils 20 und vorliegend auch senkrecht zur Längsachse 1 des Verformungskörpers 2 erstreckt, drehfest am Bauteil 20 angeschlossen werden können, siehe beispielsweise die dargestellten Bohrungen, über welche die beiden Teile jeweils der Anschlusselemente 3, 4 miteinander verschraubt werden können. Die Anschlusselemente 3, 4 weisen gemäß der Ausführungsformen in den Figuren 4 bis 6 als solche jeweils eine L-Form auf, wobei der erste durch die L-Form gebildete Schenkel in Richtung der Drehachse beziehungsweise der Längsachse 1 des Verformungskörpers 2 verläuft, und sich der zweite durch die L-Form gebildete Schenkel senkrecht zum ersten Schenkel erstreckt. Der zweite Schenkel des ersten Anschlusselementes 3 bildet beispielsweise den zweiten starren Abschnitt 7 des Verbindungselementes 6. Er ist dem zweiten Schenkel des zweiten Anschlusselementes 4 zugewandt, welcher an seinem Ende den dritten Drehpunkt 12 aufweist, über welchen der Biegebalken 5 am zweiten Anschlusselement 4 angeschlossen ist.

Wie in der Figur 6 schematisch angedeutet ist, kann die
Drehmomenterfassungsvorrichtung mit einem Gehäuse 13 versehen sein, das, um eine parallele Kraftübertragung vom ersten Anschlusselement 3 auf das zweite Anschlusselement 4 zu verringern oder vollständig auszuschließen, schwimmend beziehungsweise relativbeweglich gegenüber dem ersten Anschlusselement 3 und/oder dem zweiten Anschlusselement 4 gelagert sein kann. In der gezeigten schematischen Darstellung ist das Gehäuse 13 beispielsweise über elastische Ringe 16, vorteilhaft aus einem Elastomerwerkstoff mit niedrigem E-Modul, am ersten Anschlusselement 3 und/oder am zweiten Anschlusselement 4 aufgehängt. Das Gehäuse 13 kann beispielsweise eine elektronische Steuervorrichtung und/oder eine Spannungsversorgung oder sonstige Bauteile tragen, von welchen nachfolgend noch einige anhand der Figur 7 erläutert werden.

In der Figur 7 ist optionales Zubehör der Drehmomenterfassungsvorrichtung schematisch dargestellt. So weist die Drehmomenterfassungsvorrichtung einen internen Speicher, hier in Form einer SD-Karte auf. Andere Speicher sind selbstverständlich vorstellbar. In dem Speicher werden erfasste Drehmomente beziehungsweise Drehmomentverläufe oder Daten, aus welchen diese berechnet werden können, gespeichert.

Ferner ist eine externe Stromversorgung 19 sowie eine optische Anzeige 18 dargestellt. Die externe Stromversorgung 19 dient der Spannungsversorgung einer nicht näher gezeigten elektronischen Steuervorrichtung, welche die Dehnungen und/oder Stauchungen des Biegebalkens 5, vorteilhaft über Dehnungsmessstreifen, die auf der Oberseite und der Unterseite des Biegebalkens 5 platziert sind, erfasst, gegebenenfalls gleich umrechnet und/oder im internen Speicher 17 hinterlegt. Zugleich betätigt die elektronische Steuervorrichtung die optische Anzeige 18 derart, dass sie anzeigt, wenn ein gespeicherter zulässiger Grenzwert oder zulässiger Bereich eines vorgegebenen Drehmomentes beziehungsweise einer vorgegebenen Spannung im Bauteil 20 überschritten wird und dies durch die entsprechende Verformung des Biegebalkens 5 festgestellt wird. Schließlich kann permanent oder wahlweise ein PC, Notebook oder andere Computereinheit, auch mobile Computereinheit, wie PDA oder Mobiltelefon, an der Steuervorrichtung und/oder dem internen Speicher 17 angeschlossen werden, um die erfassten Daten auszulesen und/oder zu verarbeiten.

## Patentansprüche

1. Drehmomenterfassungsvorrichtung, insbesondere für Gelenkwellen, zum Erfassen eines mittels eines Bauteils (20) über eine Drehachse übertragenen Drehmomentes;
1.1 mit einem sich in Richtung einer Längsachse (1) erstreckenden Verformungskörper (2);
1.2 der Verformungskörper (2) weist ein erstes Anschlusselement (3) zum drehfesten Anschluss des Verformungskörpers (1) an einer ersten Position des Bauteils (20) auf;
1.3 der Verformungskörper (2) weist ein zweites Anschlusselement (4) zum drehfesten Anschluss des Verformungskörpers (1) an einer zweiten Position des Bauteils (20) versetzt entlang der Drehachse gegenüber der ersten Position auf;
1.4 das zweite Anschlusselement (4) ist mit einem Abstand (X) in Richtung der Längsachse (1) versetzt gegenüber dem ersten Anschlusselement (3) positioniert;
1.5 der Verformungskörper (2) weist ferner einen nachgiebigen Biegebalken (5) auf, der kraftschlüssig mit dem ersten Anschlusselement (3) und dem zweiten Anschlusselement (4) verbunden ist und eine Relativbewegung zwischen dem ersten Anschlusselement (3) und dem zweiten Anschlusselement (4) senkrecht oder winklig zur Längsachse (1) durch seine verbiegende Verformung ausgleicht;
1.6 der Biegebalken (5) ist über einen Hebelmechanismus (8) am ersten Anschlusselement (3) und/oder am zweiten Anschlusselement (4) angeschlossen, wobei der Hebelmechanismus (8) die Relativbewegung zwischen dem ersten Anschlusselement (3) und dem zweiten Anschlusselement (4) in eine vergleichsweise größere Relativbewegung zwischen den Enden des Biegebalkens (5) transformiert.

2. Drehmomenterfassungsvorrichtung gemäß Anspruch 1, **dadurch gekennzeichnet, dass** das erste Anschlusselement (3) und das zweite Anschlusselement (4) über ein sich zumindest teilweise in Richtung der Längsachse (1) erstreckendes Verbindungselement (6) kraftschlüssig miteinander verbunden sind, und dass das Verbindungselement (6) einen ersten Abschnitt aufweist, der den Biegebalken (5) bildet und einen zweiten sich daran anschließenden starren Abschnitt (7).

3. Drehmomenterfassung gemäß einem der Ansprüche 1 oder 2, **dadurch gekennzeichnet, dass** der Biegebalken (5) an einem seiner Enden gelenkfrei am ersten Anschlusselement (3) oder zweiten Anschlusselement (4) angeschlossen oder eingespannt ist und mit seinem anderen entgegengesetzten Ende über einen Drehpunkt (11) verdrehbar an dem Hebelmechanismus (8) angeschlossen ist.

4. Drehmomenterfassungsvorrichtung gemäß einem der Ansprüche 1 bis 3, **dadurch gekennzeichnet, dass** der Hebelmechanismus (8) einen Hebelarm (9) aufweist, der im Bereich seines ersten Endes über einen ersten Drehpunkt (10) verdrehbar am ersten Anschlusselement (3) angeschlossen ist, im Bereich seines zweiten Endes über einen zweiten Drehpunkt (11) verdrehbar im Bereich eines Endes des Biegebalkens (5) angeschlossen ist, und über einen dritten Drehpunkt (12) zwischen dem ersten Drehpunkt (10) und dem zweiten Drehpunkt (11) verdrehbar am zweiten Anschlusselement (4) angeschlossen ist.

5. Drehmomenterfassungsvorrichtung gemäß Anspruch 4, **dadurch gekennzeichnet, dass** einer oder mehrere der Drehpunkte (10, 11, 12) durch eine verformbare stoffschlüssige Verbindung zwischen dem Hebelarm (9) und dem jeweils verdrehbar angeschlossenen Anschlusselement (3, 4) und/oder Biegebalken (5) gebildet wird/werden, wobei das erste und das zweite Anschlusselement (3, 4), das Verbindungselement (6) und der Hebelarm (5) insbesondere einteilig miteinander verbunden sind.

6. Drehmomenterfassungsvorrichtung gemäß einem der Ansprüche 1 bis 5, **dadurch gekennzeichnet, dass** das erste Anschlusselement (3) und das zweite Anschlusselement (4) jeweils einen Anschlussbereich zum drehfesten Anschluss an das Bauteil (20) aufweisen, der sich ausschließlich senkrecht zur Drehachse erstreckt.

7. Drehmomenterfassungsvorrichtung gemäß einem der Ansprüche 1 bis 6, **dadurch gekennzeichnet, dass** das erste Anschlusselement (3) und das zweite Anschlusselement (4) jeweils eine L-Form aufweisen, wobei sich der erste durch die L-Form gebildete Schenkel in Richtung der Drehachse und sich der zweite durch die L-Form gebildete Schenkel senkrecht zur Drehachse erstreckt, und die beiden sich in Richtung der Drehachse erstreckenden Schenkel insbesondere einander zugewandt und parallel zueinander verlaufen.

8. Drehmomenterfassungsvorrichtung gemäß einem der Ansprüche 1 bis 7, **dadurch gekennzeichnet, dass** der Biegebalken (5) sich in seinem Querschnitt von seinem ersten Ende zu seinem zweiten Ende kontinuierlich verjüngt.

9. Drehmomenterfassungsvorrichtung gemäß einem der Ansprüche 1 bis 8, **dadurch gekennzeichnet, dass** die Drehmomenterfassungsvorrichtung ein Gehäuse (13) aufweist, das relativbeweglich gegenüber dem ersten Anschlusselement (3) und/oder dem zweiten Anschlusselement (4) gelagert ist, insbesondere mittels eines elastischen Anschlusses an dem ersten Anschlusselement (3) und/oder dem zweiten Anschlusselement (4), und welches insbesondere eine elektronische Steuervorrichtung und/oder eine Spannungsversorgung aufnimmt und/oder trägt.

10. Drehmomenterfassungsvorrichtung gemäß einem der Ansprüche 1 bis 9, **dadurch gekennzeichnet, dass** der Biegebalken (5) auf einer ersten, sich in Richtung der Längsachse (1) des Verformungskörpers (2) erstreckenden ersten Oberfläche und/oder auf einer zweiten, sich in Richtung der Längsachse (1) des Verformungskörpers (2) erstreckenden, von der ersten Oberfläche abgewandten Oberfläche einen Dehnungsmessstreifen trägt, der Dehnungen in der ersten und/oder der zweiten Oberfläche erfasst.

11. Drehmomenterfassungsvorrichtung gemäß einem der Ansprüche 1 bis 10, **dadurch gekennzeichnet, dass** sich der Biegebalken (5) in seiner Höhe, ausgehend von seinem Anschlusspunkt am ersten Anschlusselement (3), am zweiten Anschlusselement (4), am starren Abschnitt (7) oder am Hebelmechanismus (8) kontinuierlich verjüngt, wobei die Verjüngung vorzugsweise einem bogenförmigen Verlauf, insbesondere einem parabelförmigen Verlauf, vorteilhaft einer quadratischen Parabel, oder einem Kreisbogen folgt, auf einer oder beiden die Höhe begrenzenden Oberflächen.

12. Drehmomenterfassungsvorrichtung gemäß einem der Ansprüche 1 bis 10, **dadurch gekennzeichnet, dass** sich der Biegebalken (5) in seiner Breite, ausgehend von seinem Anschlusspunkt am ersten Anschlusselement (3), am zweiten Anschlusselement (4), am starren Abschnitt (7) oder am Hebelmechanismus (8) kontinuierlich verjüngt, wobei die Verjüngung vorzugsweise einen linearen Verlauf aufweist.

13. Drehmomenterfassungsvorrichtung gemäß Anspruch 1 bis 12, **dadurch gekennzeichnet, dass** der Drehmomenterfassungsvorrichtung eine elektronische Steuervorrichtung zugeordnet ist, welche insbesondere von der Drehmomenterfassungsvorrichtung getragen wird, welche die Verformung des Biegebalkens (5) insbesondere über einen oder zwei Dehnungsmessstreifen gemäß Anspruch 10 erfasst, mit einem zulässigen gespeicherten Grenzwert vergleicht und eine Grenzwertüberschreitung optisch und/oder elektronisch anzeigt und/oder speichert.
